# EUROPEAN PATENT SPECIFICATION

(11) **EP 0 542 296 B1**
(45) Date of publication and mention of the grant of the patent: **23.08.1995**
(21) Application number: 92119456.9
(22) Date of filing: 13.11.1992
(51) Int. Cl.: C08L 71/12, C08L 81/02

(54) **Resin compositions**
Harzzusammensetzungen
Compositions de résines

(30) Priority: 15.11.1991 US 792378
(43) Date of publication of application: 19.05.1993
(73) Proprietor: SUMITOMO CHEMICAL COMPANY LIMITED, Osaka-shi, Osaka 541 (JP)
(72) Inventor: Nagaoka, Kenji, Ichihara-shi (JP); Gotoh, Satoru Sumitomokagaku Sodegaura-Ryo, Sodegaura-shi, Chiba-ken, 299-02 (JP)
(74) Representative: VOSSIUS & PARTNER

(56) References cited:
- EP-A- 0 262 901
- EP-A- 0 341 422
- EP-A- 0 368 413
- GB-A- 2 218 996

## Description

The present invention relates to resin compositions, and more specifically to thermoplastic resin compositions having high impact resistance and comprising polyphenylene ethers and polyarylene sulfides as main resin components.

Polyphenylene ethers are resins having good mechanical and electrical properties and also having high thermal resistance. However, polyphenylene ethers are rather poor in moldability and solvent resistance, so that the use of polyphenylene ethers alone is greatly limited.

On the other hand, polyarylene sulfides, including polyphenylene sulfides, are an example of thermal resistant resins and have such characteristic properties that they can continuously be used at high temperatures, and that they have high rigidity. In addition, they have high melt flowability, satisfactory flame resistance and high solvent resistance. Therefore, polyarylene sulfides are widely used for the production of molded articles and films. However, polyarylene sulfides have such a drawback that they are poor in mechanical strength and particularly impact strength, so that it is difficult, due to this drawback, to further extend the field where polyarylene sulfides can be used.

As explained above, polyphenylene ethers and polyarylene sulfides individually have certain good properties. It is therefore industrially advantageous to provide a resin composition comprising a mixture of polyphenylene ethers and polyarylene sulfides and having all of good properties of these two individual resins. An example of such resin compositions is known from the disclosure of Japanese Patent Application KOKOKU No. 56-34032. However, in general, polyphenylene ethers have low compatibility with polyarylene sulfides, and therefore it is rather difficult to produce resin compositions having good mechanical properties, by blending polyphenylene ethers with polyarylene sulfides.

There are certain known compositions provided for the purpose of improving the above-mentioned disadvantages. For instance, Japanese Patent Application KOKOKU No. 60-11063 discloses resin compositions comprising polyphenylene ethers, polyphenylene sulfides and epoxy resins. Japanese Patent Application KOKAI No. 64-36645 discloses resin compositions comprising modified polyphenylene ethers and polyphenylene sulfides. In EP-A-0 368 413 a resin composition comprising polyphenylene sulfide and polyphenylene ether is described, which is modified by the addition of a compound having a functional group or by modifying the polyphenylene ether. Japanese Patent Application KOKAI No. 1-266160 teaches compositions comprising modified polyphenylene ethers, modified polyphenylene sulfides and a binder. Japanese Patent Application KOKAI No. 2-49023 discloses resin compositions comprising unsaturated carboxylic acid-modified or unsaturated carboxylic acid anhydride-modified polyphenylene ethers, polyphenylene sulfides and polyisocyanates, and also teaches other resin compositions comprising polyphenylene ethers, polyphenylene sulfides, polyisocyanates and as modifier Unsaturated carboxylic acids and/or unsaturated carboxylic acid anhydrides. These compositions according to the prior arts are good in solvent resistance and moldability, but they are still unsatisfactory in impact resistance.

Furthermore, in the Japanese Patent Application KOKAI No. 2-49023 mentioned above, there is disclosed a composition comprising polyphenylene ethers, polyphenylene sulfides and polyisocyanates as an example of compositions with poor mutual compatibility of components contained therein.

Therefore, it is an object of the present invention to provide resin compositions having good mechanical properties including impact strength, which comprise, as main resin components, a combination of polyphenylene ethers inherently having good thermal resistance and mechanical properties, and polyarylene sulfides inherently having good solvent resistance, flame retardant properties and melt flowability.

This object has been achieved by the surprising finding that resin compositions mainly comprising polyphenylene ethers and polyarylene sulfides, and further containing polyisocyanates, produce satisfactory compositions specifically having enhanced impact strength, if linear polyarylene sulfides are used as the polyarylene sulfide components. Furthermore, it has surprisingly been found that such compositions can be obtained even in the absence of unsaturated carboxylic acids or unsaturated carboxylic acid anhydrides. On the basis of these findings, the present invention has been completed.

Therefore, the present invention relates to resin compositions comprising (A) polyphenylene ether, (B) polyarylene sulfide and (C) polyisocyanate, wherein the polyarylene sulfide is a linear polyarylene sulfide.

The resin compositions according to the present invention have excellent impact strength, are economical, and can be formed into molded articles by various molding techniques such as extrusion, injection molding, blow molding and the like. Thus, the present invention brings about remarkable technical effects in the art.

The polyphenylene ethers (A), used in the present invention, are polymers having repeating units of the general formula (I): 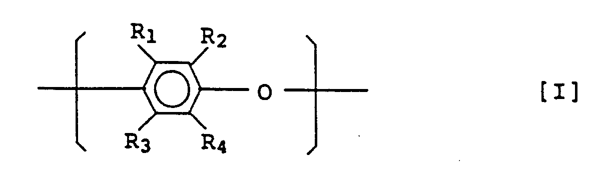
wherein R₁, R₂, R₃ and R₄ may be the same or different and individually represent a group selected from hydrogen and halogen atoms, hydrocarbyl groups, substituted hydrocarbyl groups, hydrocarbyloxy groups and substituted hydrocarbyloxy groups. As examples of substituents present in substituted hydrocarbyl groups and substituted hydrocarbyloxy groups, there may be mentioned a number of groups having thermal stability, such as halogen atoms, and hydroxyl, amino, nitro, cyano, carboxyl, amide, ether, sulfide and sulfone groups and the like.

Examples of the polyphenylene ethers represented by the general formula (I) include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), poly(2,6-dibutyl-1,4-phenylene ether), poly(2,6-dipropenyl-1,4-phenylene ether), poly(2,6-dilauryl-1,4-phenylene ether), poly(2,6-diphenyl-1,4-phenylene ether) poly(2,6-dimethoxy-1,4-phenylene ether), poly(2,6-diethoxy-1,4-phenylene ether), poly(2-methoxy-6-ethoxy-1,4-phenylene ether), poly(2-ethyl-6-stearyloxy-1,4-phenylene ether), poly(2-methyl-6-phenyl-1,4-phenylene ether), poly(2-methyl-1,4-phenylene ether), poly(2-ethoxy-1,4-phenylene ether), poly(2-chloro-1,4-phenylene ether), poly(3-methyl-6-t-butyl-1,4-phenylene ether), poly(2,6-dichloro-1,4-phenylene ether), poly(2,5-dibromo-1,4-phenylene ether), poly(2,6-dibenzyl-1,4-phenylene ether), and copolymers containing plural kinds of the repeating units mentioned above. The copolymers include, for instance, copolymers of 2,6-dimethylphenol with poly substituted phenols such as 2,3,6-trimethylphenol, 2,3,5,6-tetramethylphenol and the like. The term, used in the specification, "polyphenylene ethers" also includes polyphenylene ethers grafted with styrene monomers such as styrene, α-methylstyrene, etc. Preferred polyphenylene ethers are poly(2,6-dimethyl-1,4-phenylene ether) and a copolymer of 2,6-dimethylphenol with 2,3,6-trimethylphenol.

The preferred molecular weight of the polyphenylene ethers, used in the present invention, will vary depending on the purpose of using the same. In general, the polyphenylene ethers preferably have a molecular weight expressed as intrinsic viscosity (measured in chloroform at 30°C) of from 0.1 to 0.7 dl/g, more preferably from 0.2 to 0.6 dl/g.

Such polyphenylene ethers can be produced in a known manner disclosed, for instance, in U.S Patent Nos.3,306,874, 3,306,875 and 3,257,357, Japanese Patent Application KOKOKU No. 52-17880, and Japanese Patent Application KOKAI Nos. 50-51197 and 1-304119.

It is also possible to use the polyphenylene ethers (A) together with modifiers such as unsaturated carboxylic acids or unsaturated carboxylic acid anhydrides, or to modify the polyphenylene ethers (A) with such modifiers before the use thereof, as in the case of known resin compositions disclosed in Japanese Patent Application KOKAI No. 2-49023. However, it is not generally preferred to employ such modifiers, in view of economy and of corrosion prevention of molds and molding machines.

The polyarylene sulfides (B), employed in the present invention, are linear polyarylene sulfides. The term "linear polyarylene sulfides" means polymers which have repeating units of the below-mentioned general formula (II), and which have not been subjected to any crosslinking treatments causing a substantial increase of the molecular weight. 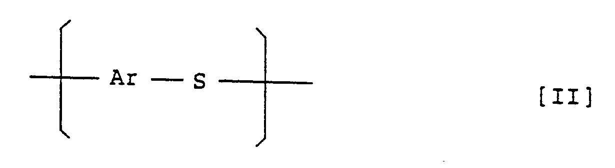
wherein Ar represents a divalent aromatic residue.

Examples of the groups Ar include groups having the formulas 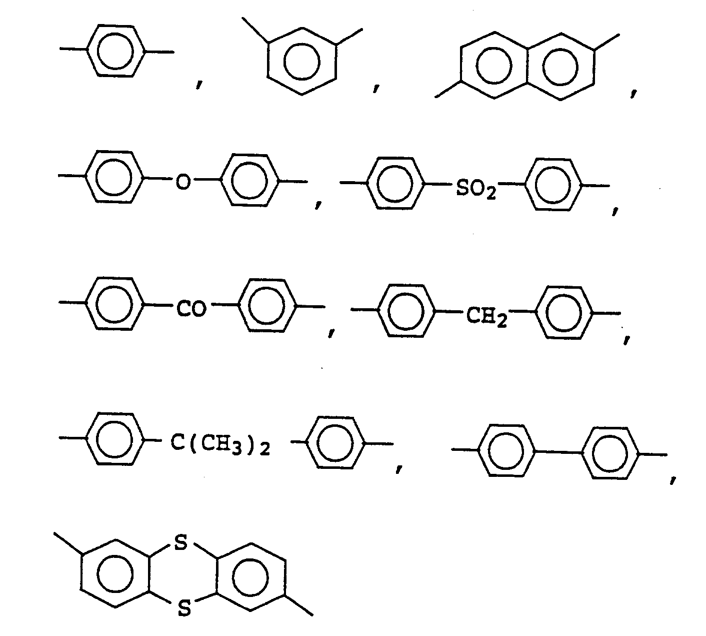
and similar groups having substituents on the aromatic rings thereof. Furthermore, the linear polyarylene sulfides according to the present invention also include the polymers which have not only the above-mentioned divalent aromatic groups but also a small quantity of trifunctional groups such as 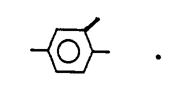
In general, the degree of crosslinking of the linear polyarylene sulfides is less than 0.1.

As examples of the linear polyarylene sulfides having the general formula (II), there may be mentioned linear polyphenylene sulfide, linear poly(1,4-phenylenecarbonyl-1,4-phenylene sulfide), linear poly(1,4-phenylene-sulfonyl-1,4-phenylene sulfide), linear poly(biphenylene sulfide) and the like. Preferred linear polyarylene sulfides are those having at least 50% by mole of the unit 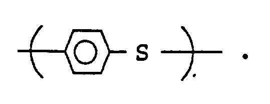
More preferably, the linear polyarylene sulfides are straight chain polyphenylene sulfides.

There is no specific limitation to the molecular weight of the linear polyarylene sulfides. In general, however, use is made of the polyarylene sulfides having a molecular weight expressed as melt viscosity (at 300°C) of from 100 to 50,000 poises, preferably from 200 to 10,000 poises.

Such linear polyarylene sulfides can be prepared in a known manner. The manufacturing methods include, for instance, a reaction of polyhalogenated aromatic compounds with sulfur sources such as alkali metal sulfides in organic amide solvents in the presence of carboxylate salts, as disclosed in Japanese Patent Application KOKOKU No. 52-12240, Japanese Patent Application KOKAI Nos. 51-144497 and 58-29822 and Japanese Patent Application KOKOKU No. 53-25880.

In the present invention, the term "polyisocyanates" means organic compounds having at least two isocyanate and/or isothiocyanate groups in one molecule. Examples of such polyisocyanates are aromatic polyisocyanates such as m-phenylene diisocyanate, 2,4-toluylene diisocyanate, 2,6-toluylene diisocyanate, 4,4'-diphenylmethane diisocyanate, 4,4'-diphenylpropane diisocyanate, naphthylene-1,5-diisocyanate, 3,3'-dimethyl-biphenyl-4,4'-diisocyanate, dimethyldiphenylmethane diisocyanate, diphenyl-ether-4,4'-diisocyanate, diphenylsulfone-4,4'-diisocyanate, triphenylmethane triisocyanate and the like; araliphatic polyisocyanates such as xylylene diisocyanate, etc.; aliphatic polyisocyanates such as 1,12-dodecane diisocyanate, hexamethylene diisocyanate, 2,4,4-trimethyl-hexamethylene diisocyanate and the like; or the cycloaliphatic polyisocyanates 4,4'-cyclohexane diisocyanate, dicyclohexylmethane-4,4'-diisocyanate, isophorone diisocyanate, mixtures of these isocyanates; and compounds having isothiocyanate groups corresponding to the above-mentioned isocyanate groups. The polyisocynates, used in the present invention, also include corresponding polymeric type compounds such as dimeric and trimeric compounds; polyisocyanates modified with carbodiimides; blocked polyisocyanates masked with phenols, lactams, etc.

Preferred polyisocyanates are aromatic and aliphatic polyisocyanates. More preferred polyisocyanates include 2,4-toluylene diisocyanate, 2,6-toluylene diisocyanate, 4,4'-diphenylmethane diisocyanate, 3,3'-dimethyl-biphenyl-4,4'-diisocyanate, diphenyl-ether-4,4'-diisocyanate, hexamethylene diisocyanate and isophorone diisocyanate. Most preferred polyisocyanate is 4,4'-diphenylmethane diisocyanate.

The proportion of polyphenylene ethers (A) to linear polyarylene sulfides (B), contained in the resin compositions according to the present invention, is not limited to a narrow range, but may be varied depending, for instance, on the thermal stability, flowability, etc. required for the resin compositions and also on the purpose of using the compositions. Generally, the weight ratio of polyphenylene ethers (A) to polyarylene sulfides (B) is between 1:99 and 99:1, preferably between 5:95 and 95:5, when expressed by weight per cent based on the total weight of polyphenylene ethers (A) and polyarylene sulfides (B).

As for polyisocyanates (C), used in the resin compositions according to the present invention, it is observed that the effects of polyisocyanates (C) will vary depending on the kinds of polyisocyanates (C) themselves, and also on the kinds and chemical constitutions of polyphenylene ethers (A) and linear polyarylene sulfides selectively used together with polyisocyanates (C) in question, and therefore it is rather difficult to simply prescribe a preferred range of the amount of polyisocyanates (C) used. Generally, polyisocyanates (C) are employed in an amount of from 0.01 to 30 parts by weight, preferably from 0.1 to 20 parts by weight, more preferably from 1 to 10 parts by weight per 100 parts by weight of a sum of polyphenylene ethers (A) and polyarylene sulfides (B).

The resin compositions according to the present invention may be prepared in any of known manners, including solution blending methods, melt blending methods, etc. Preferred are melt blending methods. In a melt blending method, use may be made of known mixing means such as Henschel mixer, Super mixer, ribbon blender, V-blender and the like, for mixing resin components with each other or for mixing resin components with liquid or solid additives to obtain a homogeneous mixture. After the mixing operation, the mixture thus formed may be blended with other materials or with other mixtures in blending means such as Banbury mixer, plastomill, Brabender Plastograph, single or twin screw extruder and the like.

The blending operations may be carried out at a temperature of from 150 to 400°C, preferably from 200 to 350°C.

As catalysts for promoting the reaction of polyisocyanates (C), it is possible to use tertiary amines, quaternary ammonium salts, phosphines, imidazoles and the like without any limitations.

If desired, the resin compositions according to the invention may optionally contain other substances. Examples of such other substances are elastomers, flame retardants, stabilizers, plasticizers, lubricants, etc.

As examples of elastomers, there may be mentioned natural rubbers, polybutadiene rubbers, polyisoprene rubbers, butyl rubbers, ethylene-propylene copolymer rubbers, butadiene-styrene copolymer rubbers, butadiene-acrylonitrile copolymer rubbers, hydrogenated and unhydrogenated styrene-conjugated diene block copolymer rubbers, polyester rubbers, acryl rubbers, silicone rubbers, modified products thereof, etc.

Among these rubbers, preferred elastomers are ternary polymers prepared from diene compounds; ethylene-propylene copolymer rubbers including graft copolymers and modified derivatives thereof prepared by the graft copolymerization, wherein unsaturated monomers, e.g. styrene are used for the grafting; and styrene-conjugated diene block copolymers such as styrene-isoprene diblock copolymers, styrene-butadiene triblock copolymers, and at least partially hydrogenated derivatives thereof.

As flame retardants, it is possible to use phosphate esters including triphenyl phosphate, tricresyl phosphate, certain phosphates prepared by using a mixture of phenol and isopropyl phenol, phosphates obtained by employing a mixture of difunctional phenols such as benzohydroquinone or bisphenol A with other phenols or alcohols, and the like; bromine compounds such as decabromo-biphenyl, pentabromo-toluene, decabromo-diphenyl ether, hexabromobenzene, brominated polystyrenes, brominated epoxy resins, etc.; nitrogen-containing compounds such as melamine, and melamine triisocyanurate, and the like.

As representative examples of stabilizers, there may be mentioned sterically hindered phenols, organic phosphites, diazide oxalates, sterically hindered amines and the like. Examples of lubricants include polyethylene waxes, paraffins, etc.

These optional substances may be used in an amount depending on the purpose of using the same. In general, these substances are used, for instance, in an amount shown below. The amount of elastomers is 100 parts by weight or less, the amount of flame retardants is 30 parts by weight or less, preferably from 1 to 20 parts by weight, the amount of stabilizers is 20 parts by weight or less, preferably from 0.001 to 10 parts by weight, and the amount of lubricants is 2 parts by weight or less per 100 parts by weight of the sum of polyphenylene ethers (A) and linear polyarylene sulfides (B).

The present invention will be illustrated in more detail by the Examples given below. However, it should be noted that the scope of the present invention is not limited only to the Examples.

In the Examples, the izod impact strength (thickness: 3.2 mm; unnotched), the tensile values and the flexural values were determined at 23°C according to ASTM D256, ASTM D638 and ASTM D790, respectively, wherein test pieces prepared by an injection molding (mold temperature 80°C) were used.

### Example 1

40 parts by weight of poly(2,6-dimethyl-1,4-phenylene ether) ("PPE H-46"®, manufactured by Japan Plyether Co., Ltd.), 60 parts by weight of linear polyphenylene sulfide ("Ryton® E1880", manufactured by Toray Philips Co., Ltd.) and 3 parts by weight of 4,4'-diphenylmethane diisocyanate were subjected to an extruding operation by using a single screw extruder having a diameter of 40 mm at a barrel temperature of 300°C. The extruded strands were pelletized, whereby a resin composition according to the present invention was obtained.

The Izod impact strength, the tensile strength, the elongation at break, the flexural strength and the flexural modulus of the above-mentioned composition were 216 kg·cm/cm, 740 kg/cm², 5.5%, 1200 kg/cm², and 27600 kg/cm², respectively. A very thin section of the composition was dyed with RuO₄, and then observed under an electron microscope of transmission type. It was found that there were polyphenylene ether particles with a size of up to 1 »m finely dispersed in a continuous phase of polyphenylene sulfide.

### Example 2

The procedures of Example 1 were repeated except that a linear polyphenylene sulfide ("Ryton® E0780" manufactured by Toray Phillips Co., Ltd.) was used as a polyarylene sulfide to obtain a resin composition according to the present invention.

The Izod impact strength, the tensile strength, the elongation at breake, the flexural strength and the flexural modulus of the resulting composition were 225 kg·cm/cm, 750 kg/cm², 5.2%, 1190 kg/cm² and 27000 kg/cm² ,respectively.

### Example 3

The procedures of Example 1 were repeated except that a linear polyphenylene sulfide ("Ryton® M2888" manufactured by Toray Phillips Co., Ltd.) was used as a polyarylene sulfide and a twin screw extruder having a diameter of 50 mm was used instead of the single screw extruder having a diameter of 40 mm to obtain a resin composition according to the present invention.

The Izod impact strength of the resulting composition was 62 kg·cm/cm .

### Comparative Example 1

The procedures of Example 1 were repeated, except that the linear polyphenylene sulfide was replaced by a crosslinked polyphenylene sulfide ("Torprene® T-4", manufactured by Torprene Co., Ltd.) to obtain a resin composition.

The izod impact strength, the tensile strength, the elongation at break, the flexural strength and the flexural modulus of the composition were 16 kg·cm/cm, 510 kg/cm², 2.3%, 990 kg/cm² and 29500 kg/cm², respectively.

### Comparative Example 2

The procedures of Example 1 were repeated cexcept that the linear polyphenylene sulfid was replaced by a crosslinked polyphenylene sulfide ("Ryton® M2100" manufactured by Toray Phillips Co., Ltd.) to obtain a resin composition.

The Izod impact strength, the tensile strength, the elongation at break, the flexural strength and the flexural modulus of the resulting composition were 18 kg·cm/cm, 540 kg/cm², 2.6%, 1010 kg/cm² and 28900 kg/cm², respectively.

## Claims

1. A resin composition comprising (A) polyphenylene ether, (B) polyarylene sulfide and (C) polyisocyanate, wherein the polyarylene sulfide is a linear polyarylene sulfide.

2. A resin composition according to claim 1, wherein the polyphenylene ether is poly(2,6-dimethyl-1,4-phenylene ether).

3. A resin composition according to claim 1 or 2, wherein the polyarylene sulfide is a linear polyphenylene sulfide.

4. A resin composition according to any of claims 1 to 3, wherein the polyisocyanate is 2,4-toluylene diisocyanate, 2,6-toluylene diisocyanate, 4,4'-diphenylmethane diisocyanate, 3,3'-dimethyl-biphenyl-4,4'-diisocyanate, diphenyl-ether-4,4'-diisocyanate, hexamethylene diisocyanate or isophorone diisocyanate.

5. A resin composition according to claim 4, wherein the polyisocyanate is 4,4'-diphenylmethane diisocyanate.

6. A resin composition according to any of claims 1 to 5, wherein the weight ratio of polyphenylene ether (A) to polyarylene sulfide (B) is between 1:99 and 99:1 as expressed by weight per cent based on the total weight of polyphenylene ether (A) and polyarylene sulfide (B).

7. A resin composition according to any of claims 1 to 6, wherein the amount of polyisocyanate (C) is between 0.01 and 30 parts by weight per 100 parts by weight of the sum of polyphenylene ether (A) and polyarylene sulfide (B).

## Patentansprüche

1. Harzzusammensetzung, die (A) Polyphenylenether, (B) Polyarylensulfid und (C) Polyisocyanat umfaßt, wobei das Polyarylensulfid ein lineares Polyarylensulfid ist.

2. Harzzusammensetzung nach Anspruch 1, wobei der Polyphenylenether Poly(2,6-dimethyl-1,4-phenylenether) ist.

3. Harzzusammensetzung nach Anspruch 1 oder 2, wobei das Polyarylensulfid ein lineares Polyphenylensulfid ist.

4. Harzzusammensetzung nach einem der Ansprüche 1 bis 3, wobei das Polyisocyanat 2,4-Toluylendiisocyanat, 2,6-Toluylendiisocyanat, 4,4'-Diphenylmethandiisocyanat, 3,3'-Dimethyl-biphenyl-4,4'-diisocyanat, Diphenylether-4,4'-diisocyanat, Hexamethylendiisocyanat oder Isophorondiisocyanat ist.

5. Harzzusammensetzung nach Anspruch 4, wobei das Polyisocyanat 4,4'-Diphenylmethandiisocyanat ist.

6. Harzzusammensetzung nach einem der Ansprüche 1 bis 5, wobei das Gewichtsverhältnis von Polyphenylenether (A) zu Polyarylensulfid (B) zwischen 1 : 99 und 99 : 1 beträgt, ausgedrückt als Gewichts-Prozent basierend auf dem Gesamtgewicht von Polyphenylenether (A) und Polyarylensulfid (B).

7. Harzzusammensetzung nach einem der Ansprüche 1 bis 6, wobei die Menge des Polyisocyanats (C) zwischen 0,01 und 30 Gewichtsteilen, bezogen auf 100 Gewichtsteile der Summe von Polyphenylenether (A) und Polyarylensulfid (B), beträgt.

## Revendications

1. Composition de résine comprenant (A) du poly(éther de phénylène), (B) du poly(sulfure d'arylène) et (C) du polyisocyanate, où le poly(sulfure d'arylène) est un poly(sulfure d'arylène) linéaire.

2. Composition de résine selon la revendication 1, où le poly(éther de phénylène) est un poly(éther de 2,6-diméthyl-1,4-phenylène).

3. Composition de résine selon la revendication 1 ou 2, où le poly(sulfure d'arylène) est un poly(sulfure de phénylène) linéaire.

4. Composition de résine selon l'une quelconque des revendications 1 à 3, où le polyisocyanate est le 2,4-toluylènediisocyanate, 2,6-toluylènediisocyanate, 4,4'-diphénylméthanediisocyanate, 3,3'-diméthyl-biphényl-4,4'-diisocyanate, diphényl-éther-4,4'-diisocyanate, hexaméthylènediisocyanate ou isophoronediisocyanate.

5. Composition de résine selon la revendication 4, où le polyisocyanate est le 4,4'-diphénylméthanediisocyanate.

6. Composition de résine selon l'une quelconque des revendications 1 à 5, où la proportion pondérale du poly(éther de phénylène) (A) au poly(sulfure d'arylène) (B) est comprise entre 1:99 et 99:1 exprimée en poids pour-cent rapportée au poids total de poly(éther de phénylène) (A) et de poly(sulfure d'arylène) (B).

7. Composition de résine selon l'une quelconque des revendications 1 à 6, où la quantité de polyisocyanate (C) est comprise entre 0,01 et 30 parties en poids pour 100 parties en poids de la somme du poly(éther de phénylène) (A) et du poly(sulfure d'arylène) (B).
